# EUROPEAN PATENT APPLICATION

(11) **EP 4 660 632 A1**
(43) Date of publication of application: **10.12.2025**
(21) Application number: 24180520.9
(22) Date of filing: 06.06.2024
(51) Int. Cl.: G01N 35/00

(54) **APPARATUS AND METHOD FOR PERFORMING AUTOMATED QUALITY CONTROL OF A PHARMACEUTICAL PRODUCT**

(71) Applicant: Trasis S.A., 4430 Ans (BE)
(72) Inventor: MORELLE, Jean-Luc, 4000 LIEGE (BE); PHILIPPART, Gauthier, 4280 AVIN (BE); BAPLUE, Frédéric, 4557 FRAITURE (Tinlot) (BE); ROUELLE, Sébastien, 5370 HAVELANGE (BE); DUMONT, Philippe, 4020 JUPILLE SUR MEUSE (BE); FRANCI, Xavier, 5300 ANDENNE (BE)
(74) Representative: AWA Benelux

(57) **Abstract**

The present invention relates to a shielded apparatus for automated and integrated quality control, in short QC, analysis of a radiopharmaceutical compound, wherein said shielded apparatus has in a front part thereof two entry ports (3, 4) configured to receive a sample loader (5) and a consumable loader (6) respectively,
wherein said sample loader (5) is a shielded holder configured to host a vial (74), preferably an optical cuvette, with a sample to be analysed,
wherein said consumable loader (6) is a tray-shaped organizer containing in use a reagent block (71) provided with reagents, reference standards and other disposables, a migration chamber with a TLC strip (72), a plurality of disposable tips (73), all necessary to the performance of the above-mentioned analyses, and
wherein it contains inside the core module (1) a 3D pipettor (8) cooperating with the disposable tips (73) for performing four different types of fluid transfer, respectively from sample to consumables (81), from sample to analytical equipment (83), from reference standards to consumables (82) and from reference standards to analytical equipment (84).

## Description

### Field of the Invention

The invention pertains to an apparatus and a method designed for performing automated quality control (hereinafter QC) of a product, preferably a radiopharmaceutical product such as PET radio-tracers.

### Background and Prior Art

It is known that quality control of products such as chemicals, pharmaceuticals, radiopharmaceuticals and food products encompasses various methodologies and apparatuses aimed at ensuring the safety, reliability and efficiency of such critical products. Traditional quality control methods often involve manual preparation, inspection and testing, which can be time-consuming and prone to human error. The particular case of radiopharmaceutical quality control forces the operators to work in parallel on different equipment's under time pressure, because of the radioactivity decay constraint. Operator exposure to radiation is also a major concern when testing the quality of radiopharmaceuticals.

In particular, automated and integrated quality control of radiopharmaceutical products include various systems and methods developed over the years, that have the following key components and steps.

Firstly, the apparatus should include a sample introduction system capable of handling the radiopharmaceutical tracer substance safely and efficiently. This system may involve automated loading of samples into the QC apparatus.

Secondly, the QC apparatus should be equipped with appropriate instrumentation for analysing various parameters of the radiopharmaceutical product. This may include but is not limited to:
- non-destructive measurements such as those carried out by automated colourimetric systems directly on the sample through an optically transparent container, that may incorporate spectrophotometers, colourimeters, or other optical instruments capable of accurately measuring and analysing colour/ clarity properties of the radiopharmaceutical;
- radioactivity measurement: utilizing detectors such as gamma counters or scintillation counters to measure radioactivity levels accurately but also being able to differentiate energy levels for gamma spectroscopy ;
- chemical analysis: techniques such as high performance liquid chromatography (HPLC), gas chromatography (GC), mass spectrometry (MS), or even colorimetric spot tests may be employed to analyse chemical composition and purity ;
- pH measurement: monitoring pH levels to ensure stability and compatibility with biological systems.

Thirdly, the apparatus should be designed for seamless integration and automation of QC processes. This ensures efficiency, reproducibility and standardization, reduces human error, and allows for high-throughput analysis.

Fourthly, a robust data management system should be incorporated to store, organize and analyse QC data generated by the apparatus as well as ensuring complete traceability of the material and processes used. This may involve software solutions capable of real-time data processing, trend analysis, and reporting.

Fifthly, the QC apparatus and method should adhere to regulatory requirements and industry standards for pharmaceutical manufacturing and quality control. This includes validation of the apparatus, calibration of instrumentation, and adherence to Good Manufacturing Practices (GMP) guidelines.

Sixthly, the apparatus should preferably feature an intuitive user interface, allowing operators to easily and swiftly interact with the system, monitor processes, and access relevant data. Training and support should be further provided to ensure proper utilization by operators.

Document US7519492B2 discloses an apparatus and a method for automated quality control of a product comprising a compartment wherein a substance is located, a monitoring device coupled to the compartment and configured to monitor at least one quality control parameter prior to an end-use of the substance, and a processor coupled to the monitoring device, wherein the monitoring device is configured to communicate data to the processor for comparing at least one quality control parameter to an end-use value, and wherein the processor is further configured to control the release of the substance from the compartment to its end-use.

Document CA2745727A1 discloses methods and apparatus to assess current aspects of quality control useful for release of radioactive compounds for imaging, such as PET tracers as injectables, in an automated manner, without user interference, and in compliance with regulatory guidelines. These method and system relate to an integrated automated and quantitative quality control analysis of a substance utilizing a single sample injection for a plurality of inline or in parallel quality control tests. A measurement value of each of the plurality of quality control parameters is determined and a comparison of each measurement value of the plurality of quality control parameters with a predetermined corresponding criterion value is made. A cumulative quality rating for the sample is determined and the validated sample is released based on the quality rating. The plurality of quality control tests comprise determination of a colour parameter and appearance parameter, determination of radionuclidic purity, determination of radioactive concentration including variable detection sensitivity, determination of pH of the sample solution, determination of K222 concentration in a microfluidic test/by GC, determination of radiochemical identity and purity, determination of specific activity of the sample from a single HPLC injection, determination of bacterial endotoxin concentration, and determination of residual solvent content by GC.

Document WO2016130458A1 discloses an automated HPLC-based quality control system to perform quality control testing on a radiopharmaceutical solution, e.g. a biomarker solution shortly after synthesis. An automated HPLC-based quality control system makes efficient use of sample volume and is compatible with a variety of radioisotopes and radiopharmaceutical compounds. In several embodiments, the automated nature of an automated HPLC-based quality control system allows for quality control tests to be conducted quickly and with minimal impact on user workflow. The conducted quality control tests of one or more solution samples comprise for example endotoxicity testing, measurement of the optical qualities of the radiopharmaceutical sample solution by means of an ultraviolet-light detector using a refractive index detector to measure the amount of each separated chemical species from the HPLC column, measuring the radioactivity of each separated chemical species from the HPLC column, measuring the pH of the sample radiopharmaceutical solution, measuring radionucleic identity, radionucleic purity, radiochemical identity, or radiochemical purity using a radiodetector, measuring colour or clarity of the sample solution with a colourimetric detector, detecting and determining the concentration of a phase transfer catalyst such as Kryptofix 2.2.2, 18-Crown-6, and Quaternary amine-derivatives, detecting the concentration of potassium and crown ethers in said sample radiopharmaceutical solution using a silica gel with iodoplatinate and a colour recognition sensor, measuring the chemical purity of said sample radiopharmaceutical solution using the electrical conductivity, etc.

Document US2013130309A1 discloses a HPLC-based quality control testing system to test a sample radiopharmaceutical solution, the system comprising: a valve to direct the flow of a sample radiopharmaceutical solution within the system; a sample radiopharmaceutical solution pumping mechanism to direct the sample radiopharmaceutical solution to said valve; a sample collection vessel to receive a first part of the sample radiopharmaceutical solution, said first sample collection vessel to hold the first part of the sample radiopharmaceutical solution for endotoxicity testing; a fluid loop in fluid communication with said valve, said fluid loop to receive a second part of the sample radiopharmaceutical solution; a HPLC column to receive the second part of the sample radiopharmaceutical solution, said HPLC column to separate molecularly distinct species within the second part of the sample radiopharmaceutical solution into a number of separated molecularly distinct species; a refractive index detector to measure the amount of each separated molecularly distinct species from said high performance liquid chromatography column; a radiation detector to measure the radioactivity of each separated molecularly distinct species from said high performance liquid chromatography column; an ultraviolet-light detector to measure the optical qualities of the second part of the sample radiopharmaceutical solution; a pH detector to measure the pH of the sample radiopharmaceutical solution; and an automated endotoxin detector to perform endotoxicity testing on the first part of the sample radiopharmaceutical solution held in the first sample collection vessel.

### Aims of the Invention

The present disclosure primarily aims at employing advanced technological components to assess in a standardized way the quality parameters of the substance, preferably a radiochemical compound such as a PET tracer, enhancing thereby reproducibility and reliability in the manufacturing process.

Another aim of the disclosure is to provide an apparatus and a method capable, through a series of versatile automated procedures, to swiftly evaluate key attributes of the product, allowing routine quality control of production batches as well as method development for R&D purposes.

Another aim of the disclosure is to automatically perform quality control tests on a wide range of isotope and tracers without any cross-contamination.

Still another goal of the disclosure is to provide a QC system which is a compact and easy-to-operate equipment, with reduced operator exposure to radiation, that allows to perform a variety of physicochemical, radiochemical and/or microbiological tests from a single sample source in an automated manner in order to meet the tests required by global and local regulations.

### Summary of the Invention

A first aspect of the present invention relates to a shielded apparatus for automated and integrated quality control, in short QC, analysis of a radiopharmaceutical compound, said apparatus comprising at least the following elements:
an internal fluid transfer system configured to autonomously connect a sample, consumables and reference standards to an equipment capable to autonomously perform a plurality of analyses ;
a core module including analytical equipment, comprising gas chromatography GC, gamma spectrometry SG, a sample hub including light sources, cameras and spectrophotometer for optical and spectroscopic measurements and a RadioTLC scanner system, configured to autonomously perform at least the quality analyses selected from the group consisting of determining: appearance, i.e. colour and turbidity, radioactivity concentration, pH, specific chemical impurities spot tests such as those for Kryptofix^{®} or tetrabutylammonium, radiochemical purity or RCP, isotope-related parameters such as half-life, gamma spectrum, radionuclidic purity, and residual solvents measurements ;
optionally a HPLC add-on module including HPLC analysis equipment configured to autonomously perform at least the analyses selected from the group consisting of determining: chemical and radiochemical purity, enantioselective purity and specific activity measurements ;

wherein said shielded apparatus has in a front part thereof two entry ports configured to receive a sample loader and a consumable loader respectively ;
wherein said sample loader is a shielded holder configured to host a vial, preferably an optical cuvette, with a sample to be analysed ;
wherein said consumable loader is a tray-shaped organizer containing in use a reagent block provided with reagents, reference standards and other disposables, a migration chamber with a TLC strip, a plurality of disposable tips, all necessary to the performance of the above-mentioned analyses ; and
wherein it contains inside the core module a 3D pipettor cooperating with the disposable tips for performing at least four different types of fluid transfer, respectively from sample to consumables, from sample to analytical equipment, from reference standards to consumables and from reference standards to analytical equipment.

According to preferred embodiments, the shielded apparatus for automated and integrated QC analysis of a radiopharmaceutical compound additionally comprises one or more of the following characteristics :
- the reagent bloc is a solid support comprising a plurality of sealed wells containing at least a pH reference, iodoplatinate, K222 reference standards, TBAOH reference standards, residual solvent reference standards, HPLC reference standards, water for blank, dilution and cleaning process solution, and comprising also respective areas for spot tests and pH test ;
- the consumable loader is provided with a sticker having a RFID tag in order to allow a complete batch tracability ;
- different tips are allocated to the pipettor in order to avoid cross-contamination, the different allocations being respectively selected from the group consisting of: sample ; diluted sample ; pH reference standard with low value, typically pH 4 ; pH reference standard with high value, typically pH 9.2 ; K222 or TBAOH reference standard ; iodo-platinate reagent; water; eluent for radio-TLC ; reference standard for GC ; and reference standard for HPLC ;
- it comprises cleaning means configured to cleaning tubing between two injection ports and GC column and SG device respectively ;
- the sample vial located in the sample loader being an optical cuvette, it comprises means for performing in situ the three non-destructive analyses of colour, turbidity and radioactivity concentration, said means being respectively a white source and a spectrophotometer for measuring the absorption spectrum of the sample, an infrared source and an IR spectrophotometer to collect the light scattered by the sample at 90°, and a radioactivity detector located in use behind the sample loader inside the apparatus ;
- the consumable loader contains a consumable area located in the centre of the system for receiving four reagent block with consumables, each surrounded by a RFID antenna for ensuring traceability and compatibility with the analytical methods and two HD cameras for optically analysing pH strips, K222 and TBA spot tests, and front solvent detection on the radio-TLC strip, the consumable loader also docking a CZT radioactivity detector under the migration chamber for performing radiochemical purity analysis ;
- it includes a data management system comprising of an embedded industrial computer with a touchscreen user interface, for storing in real-time, quantitative processing, and analysis of QC experimental data generated by the apparatus measurements, as well as generating a report assessing the quality of the sample injection in comparison with predetermined standard data.

A second aspect of the present invention relates to a method for performing automated and integrated QC analysis of a radiopharmaceutical compound, using the shielded apparatus according to anyone of the preceding claims, said method comprising at least the following steps :
- loading in the front part of the apparatus the sample loader provided with an optical cuvette containing a sample to analyse in the corresponding entry port ;
- loading in said front part the consumable loader provided with at least a reagent block, and a migration chamber with a TLC strip, and a plurality of disposable tips in the corresponding entry port ;
- identifying the content of the consumable loader by reading its RFID tag and communicating the recognition information to the data management system ;
- generally performing fluid transfers from the sample to consumables or analytical equipment on the one side and from the reference standards to the consumables or analytical equipment on the other side by using the 3D pipettor ;
- specifically performing one or more quantitative analyses of the sample in the core module by choosing in the plurality of quality control tests available, said analyses being selected in the group consisting of determining appearance, i.e. colour and turbidity, radioactivity concentration, pH, specific chemical impurities spot tests such as those for Kryptofix^{®} or tetrabutylammonium, assessing radiochemical purity, or RCP, isotope-related parameters such as half-life, gamma spectrum, radionuclidic purity, and residual solvents measurements ;
- specifically performing one or more quantitative analyses of the sample in the HPLC add-on module by choosing in the plurality of quality control tests available, said HPLC analyses being selected in the group consisting of determining chemical and radiochemical purity, enantioselective purity and specific activity measurements ;
- generally, after having obtained a measurement value on the sample for a plurality of quality control parameters, comparing each measurement value for the plurality of quality control parameters with a predetermined value linked to a corresponding QC parameter criterion; and generating a report listing the comparisons for the plurality of quality control parameters, said report providing a weighted indicator based on said comparisons, said indicator value allowing or not to validate the measured sample.

According to preferred embodiments, the method comprises one or more of the following characteristics :
- the analyses are sequenced as follows :
   ∘ the non-destructive tests, comprising colour, turbidity and radioactive concentration are conducted firstly, without the use of the reagent block ;
   ∘ secondly, pH, specific chemical impurities spot tests such as those for Kryptofix^{®} or tetrabutylammonium, and radiochemical purity test TLC/RCP are performed using dedicated consumables and cameras ;
   ∘ thirdly, residual solvents test using GC and isotopic tests comprising half-life, gamma spectrum, and radionuclidic purity using SG are performed ; and
   ∘ at last, HPLC test comprising RCP, chemical purity, enantiomeric purity and specific activity are performed.
- the non-destructive tests are performed on an optical cuvette containing the sample ;
- in the colour test, a white source illuminates the sample cuvette, a spectrophotometer measures the absorption spectrum of the sample, the colour thereof is determined using the CIELAB colour space also called L*a*b colour space and the sample is compared with the yellow series from Y1 to Y7 of the European Pharmacopeia colour references ;
- in the turbidity test, infrared light is diffused by the sample cuvette and measured by an IR spectrophotometer at 90° angle about the incident light ;
- in the radioactivity concentration test, the residual activity is measured by a radioactivity detector before and after the withdrawal of a defined sample volume, the difference in activity before and after the withdrawal allowing to calculate the volume and the radioactivity concentration ;
- the pipettor (8) withdraws pH references aliquots, typically pH 4.0 and pH 9.2, from the reagent bloc and a sample aliquot with disposable tips and releases the respective solutions on three different pH strips located on the reagent bloc, a camera further taking pictures and analysing the colours of the different pH strips ;
- the pipettor withdraws an aliquot of iodoplatinate from the reagent bloc and delivers drops on four spots on a silica plate also located on the reagent bloc, the pipettor further withdrawing an aliquot of the sample, of reference standard of K222 and/or TBAOH and water as blank from the reagent block and releasing the different solutions on the four iodoplatinate spots, while, after a certain period of time, the camera takes pictures and analyses the colours, the shape and the intensity of the different circles created by the addition of sample, reference standard and water to iodoplatinate spots, the type and number of spots corresponding to the European pharmacopeia requirements for K222 analysis ;
- successively, the pipettor delivers a drop of the sample onto the TLC strip, positioned into the migration chamber, through a spot hole, the pipettor transferring then eluent into a migration chamber reservoir through an eluent hole, the migration of the eluent across the TLC strip being monitored by a camera located on the top thereof; further at the moment the front solvent is detected according to a distance preset in the method, the pipettor moves the strip out of the chamber, using a specific tip penetrating through a scan hole of the TLC strip, and, after a pause, the pipettor pushes the strip above a shielded activity detector at a constant speed to create a TLC chromatogram.
- the pipettor delivers an aliquot of the sample into a tube located above an activity detector, a bolus of liquid being maintained steady for a certain time depending on the isotope for counting and gamma energy analysis, the presence of the liquid bolus in front of the detector is ensured by two optical detectors respectively located upstream and downstream of the detector and the liquid sample being maintained steady thanks to a stop valve, the complete setup being surrounded by lead for shielding (88) against external activity sources in order to avoid background interference, the activity decay being measured during a counting period, the measurements being used to calculate the half-life of the analysed isotope and, at the same time, the detector and a multichannel analyser allowing to create the gamma emission spectrum of the sample, so that to allow verification of the isotopic peak energy as well as radionuclidic purity ;
- the pipettor delivers an aliquot of the sample into a head space, the presence of a liquid bolus inside a liquid chamber of the head space being ensured by two optical detectors located respectively upstream and downstream of the head space, which is heated to a certain temperature, typically 55°C, for a certain time, typically 2 minutes, in order to allow the volatile compounds to migrate from the liquid chamber to a gas chamber of the head space through a semipermeable membrane, the gas sample being then transferred to a GC channel injection loop by applying a vacuum to the channel fluid path via a pump, the control of the volume transferred being ensured by a flowmeter upstream of the head space and a valve downstream of the channel fluid path, so that, once the gas sample is in the GC channel injection loop, it is injected to the column, the GC channel, the injection loop, and the column being regulated in temperature, the signal of the chromatogram being captured by a Thermal Conductimetry Detector or TCD, the chromatogram generated by the TCD 100 allowing to analyse residual solvents as well as volatile ingredients.

### Brief Description of the Drawings

Embodiments of the invention are described by referring to the attached drawings, in which :
FIG. 1 is a general representation of the QC system according to the present disclosure, comprising two modules, one called "QC1 core" and the other one "HPLC add-on".
FIG. 2 represents an embodiment of the sample loader with a sample optical cuvette and two dilution vials.
FIG. 3 represents an embodiment of the consumable loader which hosts three reagent blocks, pipetting tips and a TLC migration chamber.
FIG. 4 shows a perspective view, a plan view respectively, of a reagent block in accordance with an embodiment of the present invention.
FIG. 5 is a detailed view of an embodiment of the TLC migration chamber and the TLC strip.
FIG. 6 is a general representation of the QC1 core module with detailed description of sample loader and consumable loader to be inserted in corresponding entry ports of the machine.
FIG. 7 schematically represents the embedded 3D pipetting robot and the four different types of fluid transfer to be performed between different locations inside the module.
FIG. 8 schematically represents the kind of results that can be delivered when performing the respective tests of colour, clarity and radioactivity concentration.
FIG. 9 schematically represents the physical layout implemented in the invention for assessing the colour of the sample.
FIG. 10 schematically represents the physical layout implemented in the invention for assessing the clarity/turbidity of the sample.
FIG. 11 schematically represents the physical layout implemented in the invention for assessing the radioactivity concentration of the sample.
FIG. 12 schematically represents the kind of results that can be delivered when performing the respective tests of pH, K222, or TBAOH and RadioChemical Purity by TLC (Thin Layer Chromatography).
FIG. 13 schematically represents the physical layout implemented in the invention for assessing the pH of the sample.
FIG. 14 schematically represents the physical layout implemented in the invention for assessing the sample residual content of K222 or TBAOH.
FIG. 15 schematically represents the specific physical layout implemented in the invention for assessing the RCP of the sample.
FIG. 16 schematically represents the specific physical layout embodying the Spectro Gamma (SG) unit, especially showing the fluid path and delivering isotopic peak, radionuclidic purity and half-life measurements.
FIG. 17 schematically represents the specific physical layout embodying the gas Chromatography (GC) unit, especially showing the fluid path and delivering residual solvent measurements.

### Description of Preferred Embodiments of the Invention

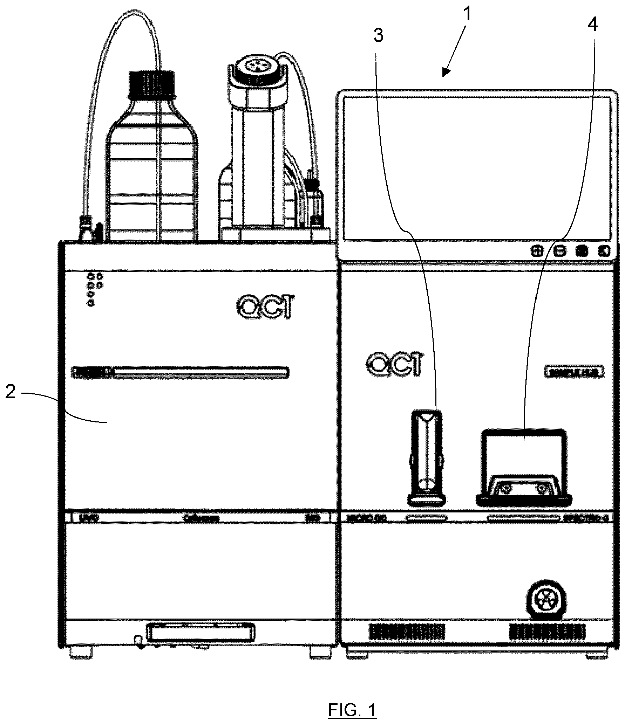

As shown on FIG. 1, the QC system of the present disclosure preferably includes two distinct modules respectively called "QC1 core" module and "HPLC add-on" module.

The QC1 core module 1 is the driver machine, including an embedded intelligence, an internal fluid transfer system and being capable to perform autonomously the following non-exhaustive list of analyses: appearance (colour and turbidity), radioactivity concentration, pH, specific chemical and radiochemical impurities, specific activity, spot tests such as those for Kryptofix^{®} or tetrabutylammonium, radiochemical purity (RCP) assessed by thin layer chromatography (TLC), isotope-related parameters such as half-life, gamma spectrum, radionuclidic purity, and residual solvents.

The QC1 core module 1 contains specific analytical instruments (GC and SG).

According to one embodiment, the HPLC module 2 is an add-on to the QC1 core 1 that will specifically allow to perform assessment of chemical and radiochemical purity, as well of as enantiomeric purity and specific activity measurements using HPLC technology.

As shown on FIGS. 1 to 6, the QC1 core 1 centralizes a maximum of analyses within one shielded equipment that has two entry ports: one port 3 for a sample loader 5 and one port 4 for a consumable loader 6 respectively.

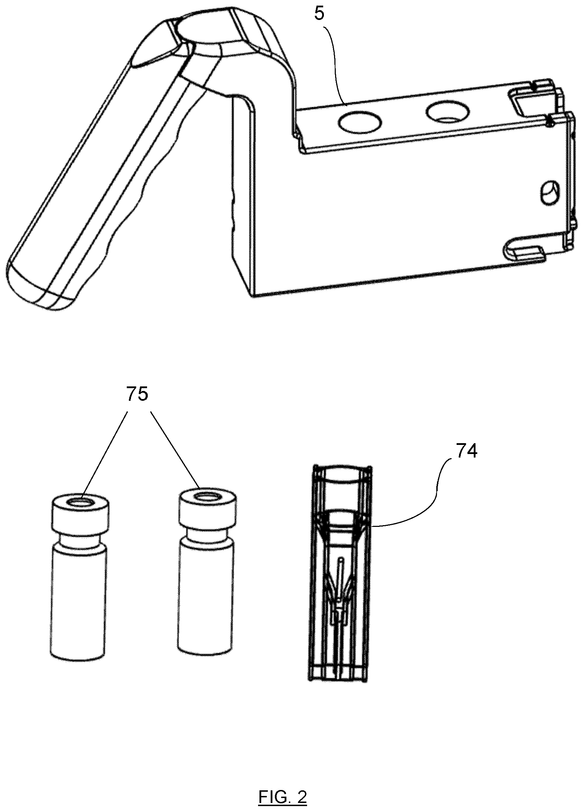

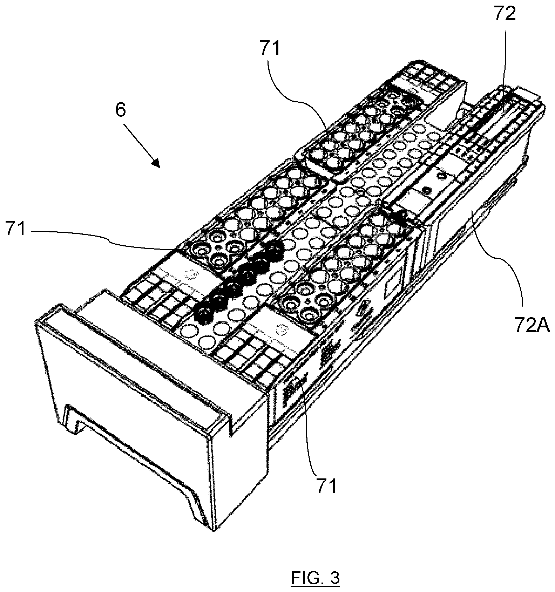

The sample loader 5, one embodiment thereof being shown on FIG. 2, is a shielded loader containing in use a sample of the solution to be analysed while the consumable loader 6, one embodiment thereof being shown on FIG. 3, contains all the reagents, reference standards and solid supports required for the intended analyses. The user can then run a combination of analyses for a specific radiochemical compound at once from the sample on the one hand and the consumables on the other hand, leading, at the end of the completely automated process, to a comprehensive report summarizing all the analyses results compared to acceptance criteria. The combination of a touch screen-controlled software and the automatic recognition of the consumable allows the complete traceability of the analytical process and greatly simplify a process that typically requires a variety of different types of equipment.

The QC1 system is meant to be used in a radioactivity-controlled laboratory by trained personnel.

The laboratory and its staff must be qualified for handling radioactive substances when radiopharmaceuticals and radiochemicals have to be analysed. The QC1 system is designed be able to be used in GMP controlled environment and supports GMP compliant production and analysis of PET and molecular imaging tracers.

There are three main types of users for the QC1 system:
- the operator: standard operator that runs the QC1 system for analysis using a predefined method with (a) predefined and compatible consumable(s). The operator does not need to have a specific scientific background, but a technical background is preferred. In addition, the user must be trained to handle radioactivity and to use the equipment;
- the methods creator: user that has an educational background in chemistry or pharmacy and is able to define method parameters that are required to meet local and/or pharmacopoeia specifications. In addition, the user must be trained to handle radioactivity and to use the dedicated equipment;
- the administrator: user that has a profile similar to the one of the methods creator with the rights to create profiles and approve methods on top. Typically, it is the site responsible pharmacist.

The above-mentioned users have the type of roles predefined by the QC1 application at start, while the application allows the administrator to create additional roles and responsibilities linked to privileges.

The quality control of radiopharmaceuticals is typically performed in a radiopharmacy department within a room separated from the production room, but there is no need for a clean room environment. However the environment needs to be controlled from radioprotection perspectives. Ultimately the QC could be done in the worst-case scenario in a hospital environment closer to the PET and SPECT cameras, i.e. with standard temperature conditions, standard pressure conditions, no clean room, a controlled area for radioprotection, access to helium pressure, and standard power supply.

According to the present disclosure, the QC1 analytical kit is a single-use consumable set that combines all the reagents, reference standards and disposable solid supports required for the present analysis of radiopharmaceuticals. According to a preferred embodiment, it includes six main components available in a box (not shown) :
- a reagent block 71;
- a TLC strip 72;
- a number of tips (X10) 73;
- a sample vial (or cuvette) 74;
- a couple of dilution vials 75.

In use, the main components are removed from the box and distributed/split either in the sample loader 5 (sample vial 74, dilution vials 75) or in the consumable loader (reagent block(s) 71, TCL strip 72, tips 73). As shown in the embodiment shown in FIG. 3, the consumable loader 6 can accommodate up to three reagent blocks 71 and a TLC migration chamber 72A (removable or not).

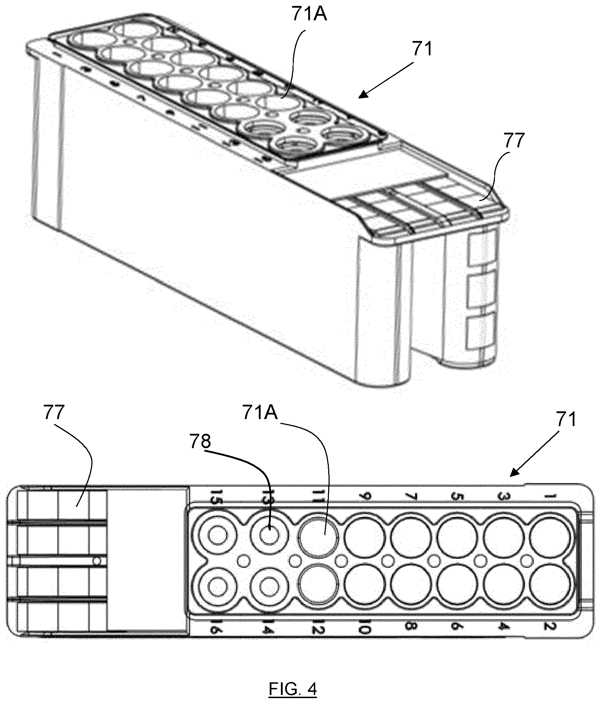

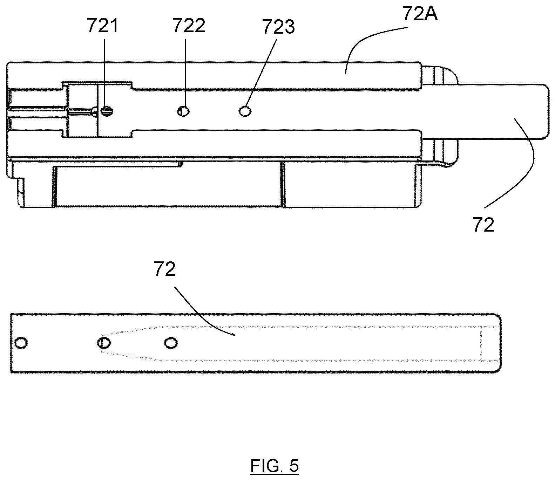

According to preferred embodiments, as shown on FIG. 4, the reagent bloc 71 comprises 16 sealed wells 71A containing successively a pH reference, lodoplatinate, K222 reference standards, TBAOH reference standards, residual solvent reference standards, HPLC reference standards, water for blank, dilution and cleaning process solution. It also includes a solid support for spot tests (such as K222 or TBAOH) and pH. A RFID tag on sticker allows the complete tracability of the batch (not shown). As shown on FIG. 5, the TLC strip 72 is a silica TLC strip which serves as support for radio TLC scan. Tips 73 allow transfer of fluids. The sample vial 74 is a container, preferably an optical vial, for hosting a sample.

The apparatus is designed so that the complete setup takes less than 2 minutes to be ready for the analysis.

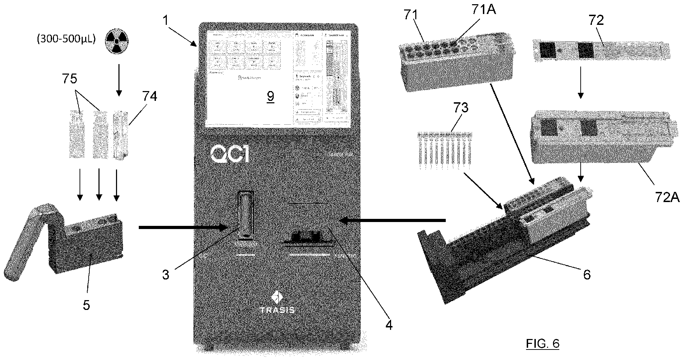

The QC1 core 1 is a completely independent system driven by an industrial PC (not shown) and a touch screen user interface 9 (see FIG. 6) that allows an operator to run and control all the different analyses to be performed inside.

In an original and rational way, the system is thus fed with a sample on the one side and consumables on the other side. A global analytical method is selected through the user interface and the automated process can perform for example up to 10 analyses in parallel inside the QC1 core unit and 4 additional ones inside the HPLC add-on module.

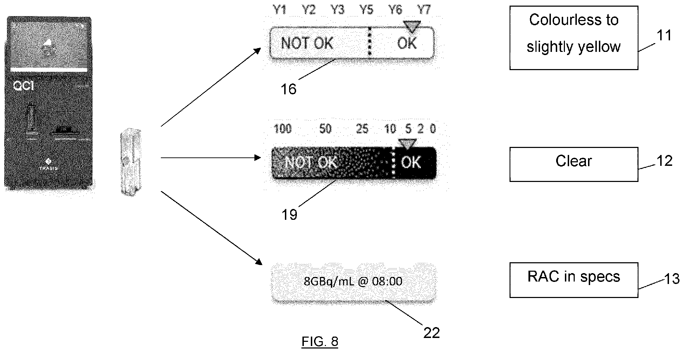

According to one embodiment, among the (10) analyses performed by the QC1 Core, three of them are performed in a non-destructive manner directly on the sample vial without any withdrawal of substance from the vial. These 3 measurements are respectively the measurement of the colour 11, the turbidity 12 and the radioactivity concentration 13 (see FIG. 8).

On the contrary, the seven other analyses require defined transfer of fluids between different locations inside the module using an embedded 3D pipetting robot 8 equipped with single use disposable tips.

There are four different types of fluid transfer using said pipettor 8 and disposable tips:
- sample to consumable 81;
- sample to analytical equipment's 83;
- reference standards to consumable 82; and
- reference standards to analytical equipment's 84.

The pipettor 8 uses a different tip 73 per type of fluid (for example up to 10 disposable tips for one sample analysis) which advantageously allows to avoid cross-contamination.

Preferably, the tip allocations are:
- sample;
- diluted sample;
- pH reference standard (low value, typically pH 4);
- pH reference standard (high value, typically pH 9.2);
- K222 or TBAOH reference standard;
- iodo-platinate reagent;
- water;
- eluent for radio-TLC;
- reference standard for GC; and
- reference standard for HPLC

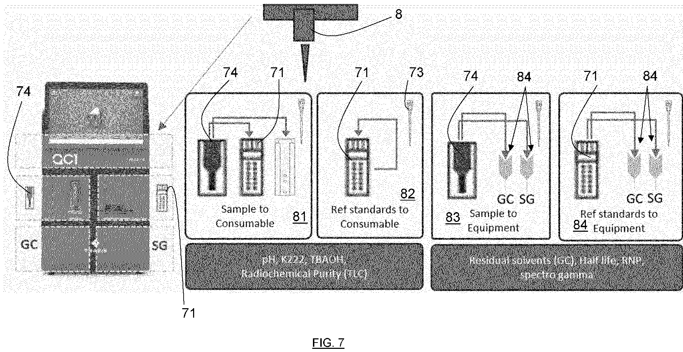

The use of disposable tips limits the risk of cross-contamination in the transfer of the sample to the gas chromatography (GC) and gamma spectro (SG) through the injection ports only (84, FIG. 7). Advantageously the system automatically performs a cleaning of the tubing between the two injection ports 84 and the SG and GC respectively.

### The sample area: COLOUR - CLARITY - RAC

The sample is inserted inside the machine (QC1 core 1) thanks to the shielded sample loader 5, preferably made of tungsten. As already mentioned, three non-destructive analyses are performed directly on the sample vial 4 : colour 11, turbidity 12 and radioactivity concentration 13 (see FIG. 8).

### Colour test

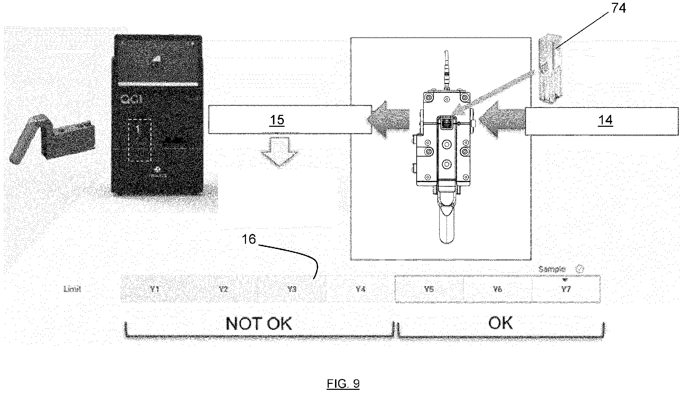

A shown on FIG. 9, a white light source 14 illuminates the sample vial 74, and a full spectrum spectrophotometer 15 measures the complete absorption spectrum of the sample which defines the colour thereof. The colour of the sample is determined in the L*a*b colour space (similar to the well-known RGB referal). The sample 74 is then compared to European Pharmacopeia colour references 16 (yellow series between Y1 and Y7) used for calibration.

### Clarity/turbidity

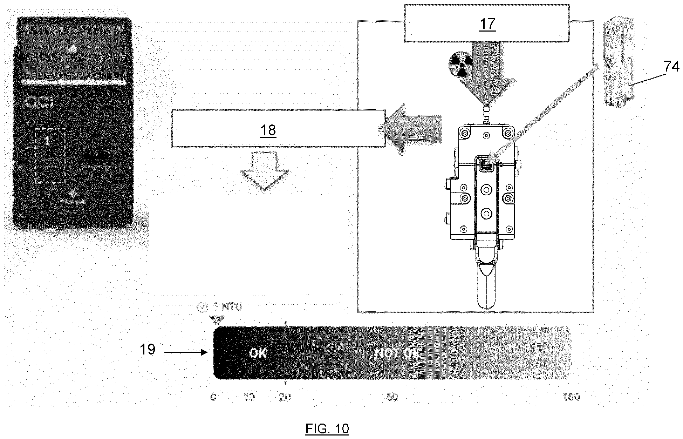

As shown on FIG. 10, the sample vial 74 is exposed to an infrared source light 17 (860nm). The light is diffused proportionally to the number of particles. A spectrophotometer 18 measures the scattered light at 90° angle. The relationship between the scattered light intensity and the turbidity level allows to define the number of NTU 19 of the solution. A clear solution is typically below 20NTU.

The Nephelometric Turbidity Unit (NTU) is the unit used to measure the turbidity of a fluid in the presence of suspended particles in water.

### RAC (radioactivity concentration)

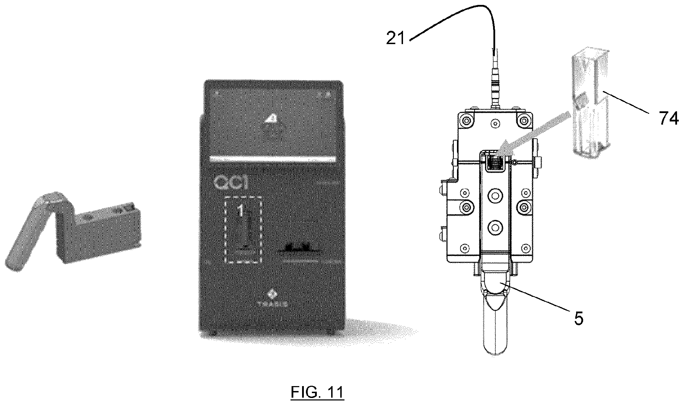

As shown on FIG. 11, a radioactivity detector 21, located behind the sample loader in use in the machine, measures the radioactivity in MBq 22. To perform the radioactivity concentration measurement, a precise and defined volume (typically 80µL) of the sample is withdrawn, the residual activity is measured and the difference in activity before and after the withdrawal allows to calculate the volume and the radioactivity concentration (RAC).

For example, for a starting activity of 8.844E+2 MBq and a remaining activity of 6.504E+2 MBq (after withdrawing of 80µL), a volume of 302.02µL and a RAC of 4470.38 MBq/mL were obtained.

### The consumable area: pH - Spot tests - RCP (TCL)

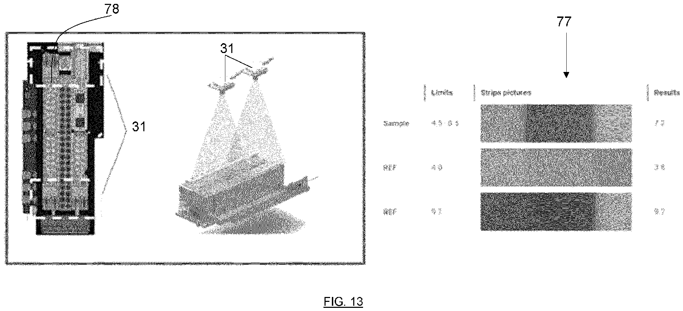

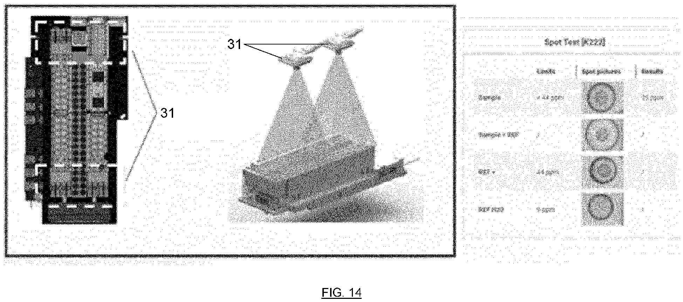

According to one embodiment, the consumable loader 6 can receive four reagent block 71 with consumables in a zone located in the centre of the system surrounded by four RFID antennas (not shown) and covered by two HD cameras 31 (see FIGS. 13 and 14). The antennas ensure the traceability and compatibility of the consumables with the analytical methods and the cameras are used for the optical analysis of pH strips and spot tests (K222 & TBA) as well as front solvent detection on the radio-TLC strip 72.

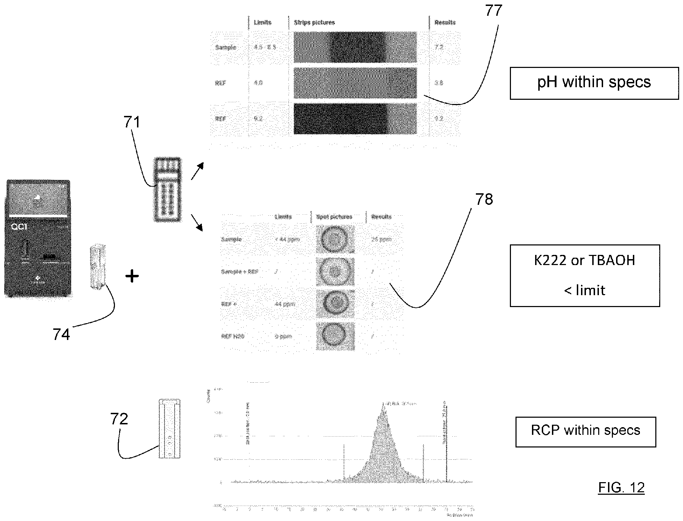

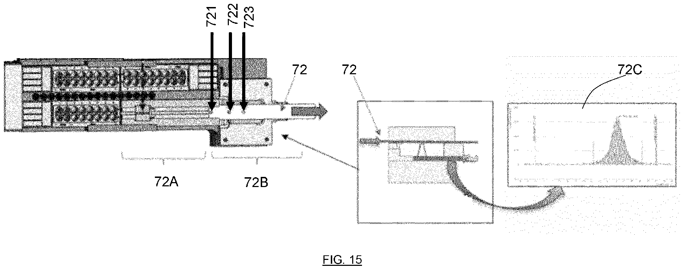

Further a shielded CZT (cadmium - zinc - telluride) radioactivity detector is docked to the loader 6 under the TLC chamber for assessing radiochemical purity (RCP-TLC) analysis as well (FIGS. 12 and 15).

### pH measurement

The pipettor 8 withdraws pH references aliquots (typically 4.0 and 9.2) from the reagent bloc 71 and a sample 74 aliquot with disposable tips 73 and relaeses the different solutions on three different pH strips 77 located on the reagent bloc 71 (FIG. 12).

A camera 31 takes pictures and analyses the colours of the different pH strips 77 on the analytical bloc (FIG. 13). The pH values are based on calibration curves using saturation and hue parameters. The two references standards (pH 4.0 and 9.2) are checked at each analysis to ensure that the system is working properly.

### K222 or TBAOH spot tests

The pipettor 8 withdraws an aliquot of iodoplatinate (typically 3µL) from the reagent bloc 71 to deposit four drops on a silica plate 78 also located on the reagent bloc. The pipettor withdraws an aliquot of the sample (3µL), of reference standards of K222 or TBAOH and water as blank from the reagent block and delivers the different solutions on the four iodoplatinate spots 78 (FIG. 14).

After a certain period of time, the camera 31 takes pictures and analyses the colours, the shape and the intensity of the different circle created by the addition of sample, reference standard and water to iodoplatinate spots 78. The type and number of spots correspond to the European Pharmacopea requirements for K222 analysis.

### Radiochemical purity (TLC scanner) - see application PCT/EP2024/051923

The pipettor 8 delivers a drop of the sample onto the TLC strip 72, positioned into the migration chamber 72A, through a spot hole 723 (FIG. 15). The eluent is then transferred into the migration chamber reservoir 72A through an eluent hole 722. The migration of the eluent across the TLC strip 72 is monitored by a camera located on the top (not shown). At the moment the front solvent is detected according to the distance set in the method, the pipettor 8 moves the strip 72 out of the container 72A, using a specific tip through a scan hole 721. After a pause the pipettor 8 pushes the strip above a shielded activity detector 72B at a constant speed to create the TLC chromatogram 72C.

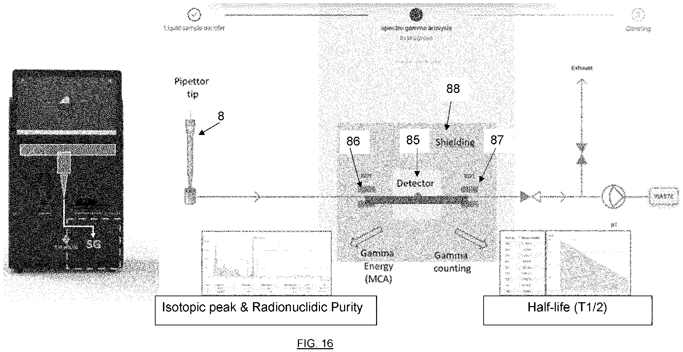

### The gamma spectro unit (SG) ; half life - radionuclidic purity - isotopic peak (FIG. 16)

The pipettor 8 delivers an aliquot of the sample (typically 35µL) into a tube located above a detector 85 designed for activity counting and energy discrimination. The bolus of liquid is maintained steady for a certain period of time depending on the isotope (typically 20 minutes for ¹⁸F) for counting and gamma energy analysis.The presence of the liquid bolus in front of the detector is ensured by two optical detectors 86, 87 respectively located upstream and downstream of the detector. The liquid sample is maintained steady thanks to a stop valve. The complete setup is surrounded by lead as shielding 88 against external activity sources in order to avoid background interference.

The activity decay is measured during the counting period, typically 10 counting measurements of 2 minutes each are performed. These values are used to calculate the half-life of the analysed isotope.

At the same time, the detector and the multichannel analyser allow to create the gamma emission spectrum of the sample.

The complete gamma emission spectrum of the sample allows to verify the isotopic peak energy as well as radionuclidic purity.

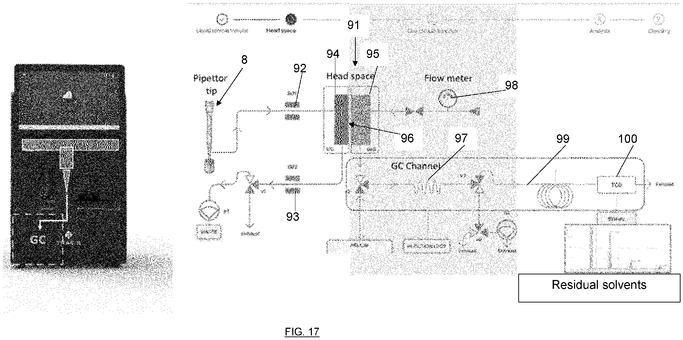

### The gas chromatography unit (GC) ; residual solvents (FIG. 17)

The pipettor 8 delivers an aliquot of the sample (typically 90µL) into a head space setup (as shown in application WO2019034596A1). The presence of the liquid bolus inside the liquid chamber 94 of the head space 91 is ensured by two optical detectors BD1 92, BD2 93 located respectively located upstream and downstream of the head space 91. The head space 91 is heated to a certain temperature (typically 55°C) for a certain period of time (typically 2 minutes) in order to allow the volatile compounds to migrate from the liquid chamber 94 to the gas chamber 95 through a semipermeable membrane 96. The gas sample is then transferred to the GC channel injection loop 97 by applying a vacuum to the channel fluidpath (via a pump), the control of the volume transferred being ensured by a flowmeter 98 upstream of the head space and a valve donwstream of the channel fluidpath. Once the gas sample is in the GC channel injection loop 97, it is injected to the column 99. The GC channel, the injection loop 97, and the column 99 are regulated in temperature. The signal of the chromatogram is captured by a Thermal Conductimetry Detector 100 (TCD).

The chromatogram generated by the TCD 100 allows to analyze residual solvents such as ethanol, acetone, acetonitrile, THF, methanol, isopropanol, etc. as well as volatile ingredients such as acetaldehyde.

The analyses to be done per module according to the embodiments of the present disclosure are detailed in Table 1 below.

**Table 1**

| **Modules** | **Analyses** | **Intended purpose** |
|---|---|---|
| Sample hub | • pH (consumable) | 1. Fluid distribution to the consumable and to the other modules |
| | • K222 (consumable) | 2. Position the consumable |
| | • Radio-chemical Purity (Radio-TLC) | 3. Specific analyses such as pH, K222, TBA, RCP & appearance |
| | • Radioactivity concentration (activity detector) | 4. Electrical communication with the other modules |
| | • Turbidity (optical cuvette) | |
| | • Colour (optical cuvette) | |
| | • External sample (i.e. endotoxin dilution for Charles River) | |
| Micro GC | Residual solvents (GC) | Residual solvents analysis using a head space device |
| Gamma spectro | • Gamma spectrum (MCA*) | 1. Gamma energy measurement |
| | • Half-life (MCA*) | 2. Full emission spectrum |
| | • Radionuclidic Purity (MCA*) | 3. Decay measurement |
| (*) multi-channel analyzer | | |

### List of reference symbols

| | |
|---|---|
| 1 | core module or sample hub |
| 2 | HPLC add-on module |
| 3 | entry port sample loader |
| 4 | entry port consumable loader |
| 5 | sample loader |
| 6 | consumable loader |
| 8 | 3D pipettor |
| 9 | touchscreen user interface |
| 11 | colour |
| 12 | turbidity (or clarity) |
| 13 | radioactivity concentration |
| 14 | white light source |
| 15 | spectrophotometer |
| 16 | pharmacopeia colour reference |
| 17 | IR source |
| 18 | IR spectrophotometer |
| 19 | turbidity reference (NTU units) |
| 21 | radioactivity detector |
| 22 | radioactivity measurement in MBq |
| 24 | injection port to GC or SG |
| 31 | camera |
| 71 | reagent block |
| 71A | sealed well |
| 72 | TLC strip |
| 72A | TLC migration chamber |
| 72B | TLC activity detector |
| 72C | TLC chromatogram |
| 73 | tip |
| 74 | sample vial (cuvette) |
| 75 | dilution vial |
| 77 | pH strip |
| 78 | iodoplatinate spot |
| 81 | sample to consumable line |
| 82 | reference standard to consumable line |
| 83 | sample to GC/SG |
| 84 | reference standard to GC/SG |
| 85 | activity detector |
| 86 | upstream optical detector |
| 87 | downstream optical detector |
| 88 | shielding |
| 91 | head space |
| 92 | upstream optical detector |
| 93 | downstream optical detector |
| 94 | liquid chamber |
| 95 | gas chamber |
| 96 | semipermeable membrane |
| 97 | GC channel injection loop |
| 98 | flowmeter |
| 99 | column |
| 100 | TCD |
| 721 | scan hole TLC strip |
| 722 | eluent hole TLC strip |
| 723 | spot hole TLC strip |

## Claims

1. A shielded apparatus for automated and integrated quality control, in short QC, analysis of a radiopharmaceutical compound, said apparatus comprising at least the following elements:
an internal fluid transfer system (8, 81, 82, 83, 84) configured to autonomously connect a sample, consumables and reference standards to an equipment capable to autonomously perform a plurality of analyses ;
a core module (1) including analytical equipment, comprising gas chromatography GC, gamma spectrometry SG, a sample hub including light sources, cameras and spectrophotometer for optical and spectroscopic measurements and a RadioTLC scanner system, configured to autonomously perform at least the quality analyses selected from the group consisting of determining: appearance, i.e. colour and turbidity, radioactivity concentration, pH, specific chemical impurities spot tests such as those for Kryptofix^{®} or tetrabutylammonium, radiochemical purity or RCP, isotope-related parameters such as half-life, gamma spectrum, radionuclidic purity, and residual solvents measurements ;
optionally a HPLC add-on module (2) including HPLC analysis equipment configured to autonomously perform at least the analyses selected from the group consisting of determining: chemical and radiochemical purity, enantioselective purity and specific activity measurements ;
wherein said shielded apparatus has in a front part thereof two entry ports (3, 4) configured to receive a sample loader (5) and a consumable loader (6) respectively ;
wherein said sample loader (5) is a shielded holder configured to host a vial (74), preferably an optical cuvette, with a sample to be analyzed ;
wherein said consumable loader (6) is a tray-shaped organizer containing in use a reagent block (71) provided with reagents, reference standards and other disposables, a migration chamber with a TLC strip (72), a plurality of disposable tips (73), all necessary to the performance of the above-mentioned analyses ; and
wherein it contains inside the core module (1) a 3D pipettor (8) cooperating with the disposable tips (73) for performing at least four different types of fluid transfer, respectively from sample to consumables (81), from sample to analytical equipment (83), from reference standards to consumables (82) and from reference standards to analytical equipment (84).

2. The shielded apparatus for automated and integrated QC analysis of a radiopharmaceutical compound according to claim 1, wherein the reagent bloc (71) is a solid support comprising a plurality of sealed wells (71A) containing at least a pH reference, iodoplatinate, K222 reference standards, TBAOH reference standards, residual solvent reference standards, HPLC reference standards, water for blank, dilution and cleaning process solution, and comprising also respective areas for spot tests (78) and pH test (77).

3. The shielded apparatus for automated and integrated QC analysis of a radiopharmaceutical compound according to claim 1, wherein the consumable loader (6) is provided with a sticker having a RFID tag in order to allow a complete batch tracability.

4. The shielded apparatus for automated and integrated QC analysis of a radiopharmaceutical compound according to claim 1, wherein different tips (73) are allocated to the pipettor (8) in order to avoid cross-contamination, the different allocations being respectively selected from the group consisting of: sample ; diluted sample ; pH reference standard with low value, typically pH 4 ; pH reference standard with high value, typically pH 9.2 ; K222 or TBAOH reference standard ; iodo-platinate reagent ; water ; eluent for radio-TLC ; reference standard for GC ; and reference standard for HPLC.

5. The shielded apparatus for automated and integrated QC analysis of a radiopharmaceutical compound according to claim 1, wherein it comprises cleaning means configured to cleaning tubing between two injection ports (84) and GC column and SG device respectively.

6. The shielded apparatus for automated and integrated QC analysis of a radiopharmaceutical compound according to claim 1, wherein, the sample vial (74) located in the sample loader (5) being an optical cuvette, it comprises means for performing in situ the three non-destructive analyses of colour, turbidity and radioactivity concentration, said means being respectively a white source (14) and a spectrophotometer (15) for measuring the absorption spectrum of the sample, an infrared source (17) and an IR spectrophotometer (18) to collect the light scattered by the sample at 90°, and a radioactivity detector (21) located in use behind the sample loader (5) inside the apparatus.

7. The shielded apparatus for automated and integrated QC analysis of a radiopharmaceutical compound according to claim 1, wherein the consumable loader (6) contains a consumable area (78) located in the centre of the system for receiving four reagent block with consumables (71), each surrounded by a RFID antenna for ensuring traceability and compatibility with the analytical methods and two HD cameras (31) for optically analysing pH strips, K222 and TBA spot tests, and front solvent detection on the radio-TLC strip (72), the consumable loader (6) also docking a CZT radioactivity detector (72B) under the migration chamber (72A) for performing radiochemical purity analysis.

8. The shielded apparatus for automated and integrated QC analysis of a radiopharmaceutical compound according to claim 1, wherein it includes a data management system comprising of an embedded industrial computer with a touchscreen user interface (9), for storing in real-time, quantitative processing, and analysis of QC experimental data generated by the apparatus measurements, as well as generating a report assessing the quality of the sample injection in comparison with predetermined standard data.

9. A method for performing automated and integrated QC analysis of a radiopharmaceutical compound, using the shielded apparatus according to anyone of the preceding claims, said method comprising at least the following steps :
- loading in the front part of the apparatus the sample loader (5) provided with an optical cuvette (74) containing a sample to analyse in the corresponding entry port (3) ;
- loading in said front part the consumable loader (6) provided with at least a reagent block (71), and a migration chamber with a TLC strip (72), and a plurality of disposable tips (73) in the corresponding entry port (4) ;
- identifying the content of the consumable loader (6) by reading its RFID tag and communicating the recognition information to the data management system ;
- generally performing fluid transfers from the sample to consumables or analytical equipment on the one side and from the reference standards to the consumables or analytical equipment on the other side by using the 3D pipettor (8) ;
- specifically performing one or more quantitative analyses of the sample in the core module (1) by choosing in the plurality of quality control tests available, said analyses being selected in the group consisting of determining appearance, i.e. colour and turbidity, radioactivity concentration, pH, specific chemical impurities spot tests such as those for Kryptofix^{®} or tetrabutylammonium, assessing radiochemical purity, or RCP, isotope-related parameters such as half-life, gamma spectrum, radionuclidic purity, and residual solvents measurements ;
- specifically performing one or more quantitative analyses of the sample in the HPLC add-on module (2) by choosing in the plurality of quality control tests available, said HPLC analyses being selected in the group consisting of determining chemical and radiochemical purity, enantioselective purity and specific activity measurements ;
- generally, after having obtained a measurement value on the sample for a plurality of quality control parameters, comparing each measurement value for the plurality of quality control parameters with a predetermined value linked to a corresponding QC parameter criterion; and generating a report listing the comparisons for the plurality of quality control parameters, said report providing a weighted indicator based on said comparisons, said indicator value allowing or not to validate the measured sample.

10. The method for performing automated and integrated QC analysis of a radiopharmaceutical compound according to claim 9, wherein the analyses are sequenced as follows :
- the non-destructive tests, comprising colour, turbidity and radioactive concentration are conducted firstly, without the use of the reagent block (71) ;
- secondly, pH, specific chemical impurities spot tests such as those for Kryptofix^{®} or tetrabutylammonium, and radiochemical purity test TLC/RCP are performed using dedicated consumables (71A) and cameras (31) ;
- thirdly, residual solvents test using GC and isotopic tests comprising half-life, gamma spectrum, and radionuclidic purity using SG are performed ; and
- at last, HPLC test comprising RCP, chemical purity, enantiomeric purity and specific activity are performed.

11. The method for performing automated and integrated QC analysis of a radiopharmaceutical compound according to claim 9, wherein the non-destructive tests are performed on an optical cuvette (74) containing the sample.

12. The method for performing automated and integrated QC analysis of a radiopharmaceutical compound according to claim 11, wherein, in the colour test, a white source (14) illuminates the sample cuvette (74), a spectrophotometer (15) measures the absorption spectrum of the sample, the colour thereof is determined using the CIELAB colour space also called L*a*b colour space and the sample is compared with the yellow series from Y1 to Y7 of the European Pharmacopeia colour references (16).

13. The method for performing automated and integrated QC analysis of a radiopharmaceutical compound according to claim 12, wherein, in the turbidity test, infrared light (17) is diffused by the sample cuvette (74) and measured by an IR spectrophotometer (18) at 90° angle about the incident light.

14. The method for performing automated and integrated QC analysis of a radiopharmaceutical compound according to claim 11, wherein, in the radioactivity concentration test, the residual activity is measured by a radioactivity detector (21) before and after the withdrawal of a defined sample volume, the difference in activity before and after the withdrawal allowing to calculate the volume and the radioactivity concentration.

15. The method for performing automated and integrated QC analysis of a radiopharmaceutical compound according to claim 9, wherein the pipettor (8) withdraws pH references aliquots, typically pH 4.0 and pH 9.2, from the reagent bloc (71) and a sample (74) aliquot with disposable tips (73) and releases the respective solutions on three different pH strips (77) located on the reagent bloc (71), a camera (31) further taking pictures and analysing the colours of the different pH strips (77).

16. The method for performing automated and integrated QC analysis of a radiopharmaceutical compound according to claim 9, wherein the pipettor (8) withdraws an aliquot of iodoplatinate from the reagent bloc (71) and delivers drops on four spots on a silica plate (78) also located on the reagent bloc (71), the pipettor (8) further withdrawing an aliquot of the sample, of reference standard of K222 and/or TBAOH and water as blank from the reagent block (71) and releasing the different solutions on the four iodoplatinate spots, while, after a certain period of time, the camera (31) takes pictures and analyses the colours, the shape and the intensity of the different circles created by the addition of sample, reference standard and water to iodoplatinate spots, the type and number of spots (78) corresponding to the European Pharmacopea requirements for K222 analysis.

17. The method for performing automated and integrated QC analysis of a radiopharmaceutical compound according to claim 9, wherein, successively, the pipettor (8) delivers a drop of the sample onto the TLC strip (72), positioned into the migration chamber (72A), through a spot hole (723), the pipettor (8) transferring then eluent into a migration chamber reservoir through an eluent hole (722), the migration of the eluent across the TLC strip (72) being monitored by a camera (31) located on the top thereof; further at the moment the front solvent is detected according to a distance preset in the method, the pipettor (8) moves the strip (72) out of the chamber, using a specific tip (73) penetrating through a scan hole (721) of the TLC strip, and, after a pause, the pipettor (8) pushes the strip above a shielded activity detector (72B) at a constant speed to create a TLC chromatogram.

18. The method for performing automated and integrated QC analysis of a radiopharmaceutical compound according to claim 9, wherein the pipettor (8) delivers an aliquot of the sample into a tube located above an activity detector (85), a bolus of liquid being maintained steady for a certain time depending on the isotope for counting and gamma energy analysis, the presence of the liquid bolus in front of the detector is ensured by two optical detectors (86, 87) respectively located upstream and downstream of the detector and the liquid sample being maintained steady thanks to a stop valve, the complete setup being surounded by lead as shielding (88) against external activity sources in order to avoid background interference, the activity decay being measured during a counting period, the measurrements being used to calculate the half-life of the analysed isotope and, at the same time, the detector and a multichannel analyser allowing to create the gamma emission spectrum of the sample, so that to allow verification of the isotopic peak energy as well as radionuclidic purity.

19. The method for performing automated and integrated QC analysis of a radiopharmaceutical compound according to claim 9, wherein the pipettor (8) delivers an aliquot of the sample into a head space (91), the presence of a liquid bolus inside a liquid chamber (94) of the head space (91) being ensured by two optical detectors (92, 93) located respectively upstream and downstream of the head space (91), which is heated to a certain temperature, typically 55°C, for a certain time, typically 2 minutes, in order to allow the volatile compounds to migrate from the liquid chamber (94) to a gas chamber (95) of the head space (91) through a semipermeable membrane (96), the gas sample being then transferred to a GC channel injection loop (97) by applying a vacuum to the channel fluidpath via a pump, the control of the volume transferred being ensured by a flowmeter (98) upstream of the head space (91) and a valve donwstream of the channel fluidpath, so that, once the gas sample is in the GC channel injection loop (97), it is injected to the column (99), the GC channel, the injection loop (97), and the column (99) being regulated in temperature, the signal of the chromatogram being captured by a Thermal Conductimetry Detector or TMD (100), the chromatogram generated by the TCD (100) allowing to analyze residual solvents as well as volatile ingredients.
